# EUROPEAN PATENT APPLICATION

(11) **EP 1 791 384 A1**
(43) Date of publication of application: **30.05.2007**
(21) Application number: 06124824.1
(22) Date of filing: 27.11.2006
(51) Int. Cl.: H04Q 7/38

(54) **Method and apparatus for handover in digital broadcasting system**

(30) Priority: 28.11.2005 US 739923 P; 05.04.2006 KR 20060030932; 28.07.2006 US 833816 P
(71) Applicant: Samsung Electronics Co., Ltd., Suwon-si, Gyeonggi-Do (KR)
(72) Inventor: Xu, Yiling, Yeongtong-gu, Suwon-si Gyeonggi-do (KR); Ann, Jong-Hoon, Yeongtong-gu, Suwon-si Gyeonggi-do (KR); Song, Jae-Yeon, Yeongtong-gu, Suwon-si Gyeonggi-do (KR); Lee, Hye-Young, Yeongtong-gu, Suwon-si Gyeonggi-do (KR); Lee,Kook-Heui, Yeongtong-gu, Suwon-si Gyeonggi-do (KR)
(74) Representative: Grünecker, Kinkeldey, Stockmair & Schwanhäusser Anwaltssozietät

(57) **Abstract**

Disclosed is a method and an apparatus for supporting smooth and seamless handover of a terminal receiving digital broadcasting in a digital broadcasting system. A handover method by a network node includes the steps of receiving a handover proposal message from a terminal, the handover proposal message containing a time for signal quality evaluation, a service ID, and a cell ID, the terminal receiving a broadcasting service from a serving cell; evaluating signal qualities of candidate cells providing a service corresponding to the service ID; calculating a handover candidate parameter based on a result of evaluation of the signal qualities of the candidate cells, the handover candidate parameter indicating time available for handover with regard to respective candidate cells; and transmitting the handover candidate parameter to the terminal.

## Description

### BACKGROUND OF THE INVENTION

### 1. Field of the Invention

The present invention relates to a digital broadcasting system, and more particularly to a method and an apparatus for supporting smooth and seamless handover of a terminal for receiving digital broadcasts.

### 2. Description of the Related Art

The standardization of digital broadcasting is currently in progress and is based on various technologies in different regions. For example, broadcasting standards proposed in China include DMB (Digital Multimedia Broadcasting), ADTB (Advanced Digital Television Broadcasting) - T (Terrestrial), and DVB (Digital Video Broadcasting) -T.

DMB services are classified into DMB-T and DMB-S (Satellite) services according to the transmission medium. Services in Europe are based on the DMB-T, while the DMB-S has prevailed in the United States. In far eastern Asia, a multimedia service including a mobile TV service is to be pioneered. DMB-T transmission systems are suitable not only for stationary terminals, but also for portable/mobile terminals. However, the DMB-T transmission systems need to reduce their own weight and power consumption to be better suited to portable devices. Digital broadcasting developed for portable devices is referred to as DVB-H (Handheld).

DVB transmission systems generally provide a bit rate of 10Mbps or greater. This is based on a TDM (Time Division Multiplexing) scheme and substantially reduces the average power consumption of DVB receivers. Such a scheme is referred to as a time slicing scheme and is based on the idea that broadcasting data is transmitted in bursts by using a bit rate substantially greater than that needed to continuously transmit data. The period of time until the next burst begins is designated as Δt.

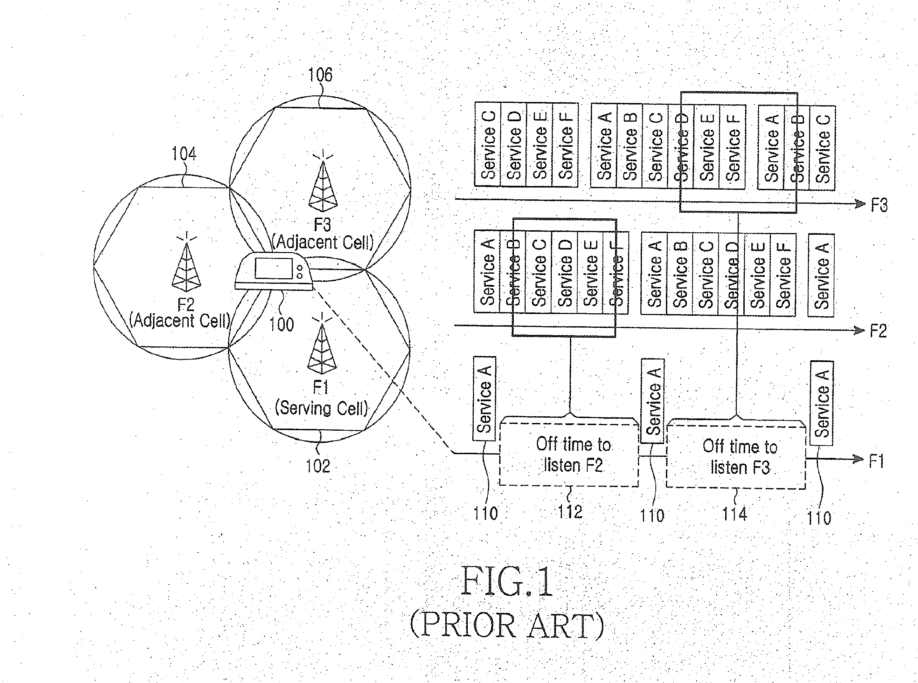

FIG. 1 shows a time slicing scheme in a typical DVB system As shown, a terminal 100 is positioned in an overlapping region among a first cell 102 administrating a first frequency F 1 (hereinafter, referred to as cell F1), a second cell 104 administrating a second frequency F2 (hereinafter, referred to as cell F2), and a third cell 106 administrating a third frequency F3 (hereinafter, referred to as cell F3). Respective cells 102 to 106 transmit services, which are available in their own frequency, in a TDM scheme, and bursts of the same service are repeated at a predetermined cycle. Services transmitted by respective cells 102 to 106 are not necessarily synchronized with one another.

When the terminal 100 receives service A from the cell F 1 102, data of an ES (Element Stream) may not be transmitted between bursts of the service A, and the terminal 100 may utilize a bit rate having other ESs allocated in a different manner, as shown in FIG. 1. This means that the terminal 100 remains activated for a very short period of time, i.e. while receiving bursts of the requested service. If the mobile terminal 100 requires a lower fixed bit rate, that bit rate may be provided by buffering received bursts.

According to the time slicing scheme, receivers may be used to monitor adjacent cells during off-time. Switching between TSs (Transport Streams) during off-time prevents interruption of service reception. When bursts of a specific IP (Internet Protocol) stream are synchronized between adjacent cells, to which the receivers are tuned, suitable measures make it possible to continuously receive the IP stream without data loss. As such, the time slicing scheme aims at reducing power consumption of mobile terminals.

Time slicing must be optimized in terms of terminals. This follows the DVB selection rule, which states that optimization must be made with regard to receivers, which outnumber transmitters. In general, the implement cost on the network side is less important than that on the terminal side. Time sliding enables receivers to monitor adjacent cells during off-time. Switching between TSs during off-time prevents interruption of service reception, as mentioned above.

As shown in FIG. 1, although the terminal 100 receives service A from the cell F1 102, the quality is poor. The terminal 100 then listens to other frequencies, i.e. F2 and F3, during off-time 112 and 114 between bursts 110 of the service A. Particularly, the terminal 100 listens to F2 during first off-time 110 and listens to F3 during second off-time 114. The terminal 100 listens to the cell F2 104 and the cell F3 106 during the first and second off-time 112 and 114, respectively, compares the result of listening, and switches to a better cell.

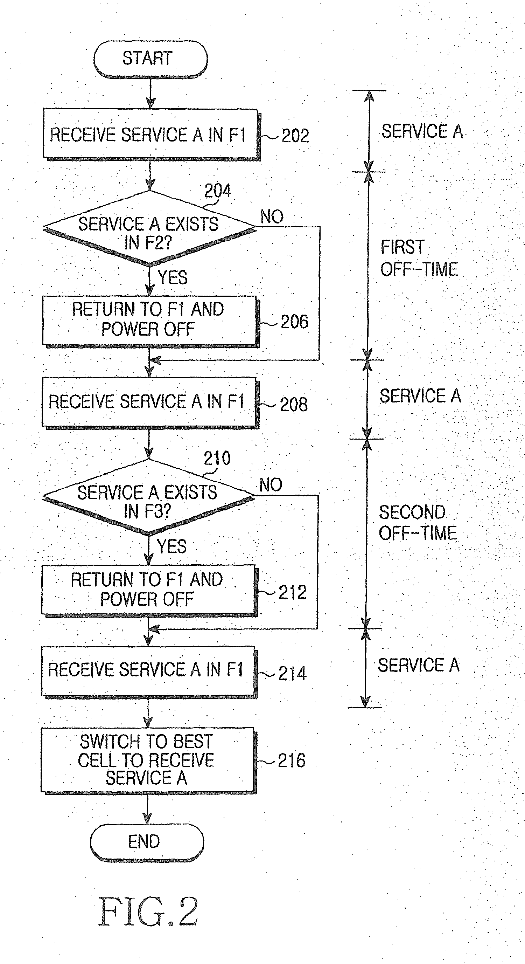

FIG. 2 is a flowchart showing handover based on time slicing in a digital broadcasting system

Referring to FIG. 2, a terminal receives a burst of service A from a cell using frequency F1 (hereinafter, referred to as cell F1), which acts as a serving cell of the terminal, in step 202. When the burst of service A ends and first off-time beings, the terminal checks if service A exists in cell F2 and evaluates the signal quality in step 204. In the case of FIG. 1, services B, C, D, E, and F are searched for during first off-time 112 for F2. Upon successfully searching for service A, the terminal stores corresponding information, returns to cell F1, and remains powered off until the next burst of service A begins in step 206. The terminal receives bursts of service A in step 208.

After bursts of service A end and second off-time begins, the terminal checks if service A exists in cell F3 and evaluates the signal quality in step 210. In the case of FIG. 1, services D, E, F, and A are searched for during second off-time 114 for F3. Having successfully searched for service A, the terminal stores corresponding information, returns to cell F1, and remains powered off until the next burst of service A begins in step 212. The terminal receives bursts for a period of time allocated to service A. After completely listening to frequencies of all adjacent cells (except cell F1) between bursts of service A, the terminal compares the signal quality of adjacent cells for receiving service A, selects the best cell, and switches to the best cell so as to receive service A in step 216.

In a typical DVB system constructed as above, a terminal continuously listens to adjacent frequencies for a handover process, detects services expected from adjacent cells, and checks time available for handover. This increases the amount of power consumed by the terminal. In addition, there exist problems which cannot be solved by the terminal alone during a handover process.

### SUMMARY OF THE INVENTION

Accordingly, the present invention has been made to solve at least the above-mentioned problems occurring in the prior art, and an object of the present invention is to provide a method and an apparatus for performing a network-based handover procedure by using an interactive channel in a digital broadcasting system.

Another object of the present invention is to provide a method and an apparatus for determining to handover of a terminal in a digital broadcasting system, based on a network, and transmitting the result of determination to the terminal via an interactive channel.

In order to accomplish this and other objects, there is provided a handover method by a network node in a digital broadcasting system, the method includes receiving a handover proposal message from a terminal, the handover proposal message containing a time for signal quality evaluation, a service ID, and a cell ID, the terminal receiving a broadcasting service from a serving cell; evaluating signal quality of all candidate cells providing a service corresponding to the service ID; calculating a handover candidate parameter based on a result of evaluation of signal quality of the candidate cells, the handover candidate parameter indicating the time available for handover with regard to respective candidate cells; and transmitting the handover candidate parameter to the terminal.

In accordance with another aspect of the present invention, there is provided a network node apparatus for performing handover in a digital broadcasting system, the apparatus including a parameter collection unit for receiving a handover proposal message from a terminal, the handover proposal message containing a time for signal quality evaluation, a service ID, and a cell ID, the terminal receiving a broadcasting service from a serving cell; a handover parameter calculation unit for evaluating signal quality of all candidate cells providing a service corresponding to the service ID, the handover parameter calculation unit calculating a handover candidate parameter based on a result of evaluation of signal quality of the candidate cells, the handover candidate parameter indicating the time available for handover with regard to respective candidate cells; and a message transmission unit for transmitting the handover candidate parameter to the terminal.

In accordance with another aspect of the present invention, there is provided a handover method by a terminal in a digital broadcasting system, the method includes transmitting a handover proposal message while receiving a broadcasting service from a serving cell, the handover proposal message containing a time for signal quality evaluation, a service ID, and a cell ID; receiving a handover candidate parameter indicating time available for handover with regard to candidate cells providing a service corresponding to the service ID; selecting an best cell from the candidate cells according to the time available for handover; and performing handover to the best cell.

In accordance with another aspect of the present invention, there is provided a terminal apparatus for performing handover in a digital broadcasting system, the apparatus including a first radio frequency unit for receiving a broadcasting signal of a desired broadcasting service from a broadcasting system by using a search frequency of a serving cell, the first radio frequency unit evaluating signal quality of the broadcasting signal; a broadcasting data processing unit for demodulating and decoding the broadcasting signal, the broadcasting data processing unit extracting service information from the broadcasting signal; a second radio frequency unit for transmitting/receiving an interactive signal to/from an interactive system; an interactive data processing unit for transmitting a handover proposal message via the second radio frequency unit while receiving a broadcasting service from the serving cell, the handover proposal message containing a time for signal quality evaluation, a service ID, and a cell ID, the interactive data processing unit receiving a handover candidate parameter via the second radio frequency unit, the handover candidate parameter indicating time available for handover with regard to candidate cells providing the broadcasting service received from the serving cell; a handover determination unit for determining if handover is necessary based on signal quality of the broadcasting signal; and a handover control unit for selecting an best cell from the candidate cells based on signal quality of the candidate cells, the time available for handover, and the service information when it is determined that handover is necessary, the handover control unit controlling the first and second radio frequency units so as to perform handover to the best cell.

### BRIEF DESCRIPTION OF THE DRAWINGS

The above and other objects, features, and advantages of the present invention will be more apparent from the following detailed description taken in conjunction with the accompanying drawings, in which:
FIG. 1 shows time slicing in a typical DVB system;
FIG. 2 is a flowchart showing handover based on time slicing in a digital broadcasting system;
FIG. 3 shows an example of time available for handover in a DVB-H system;
FIG. 4 shows an example of a handover interval in a DVB-H system;
FIG. 5 shows an example of a handover operation in a DVB-H system;
FIG. 6 shows the flow of signals for handover according to the present invention;
FIG. 7 shows determination of a handover candidate parameter according to the present invention;
FIG. 8 is a flowchart showing a handover operation of a network node according to the present invention;
FIG. 9 is a flowchart showing a handover operation of a terminal according to the present invention;
FIG. 10 is a block diagram showing the conceptual structure of a DVB-CBMS receiver for performing handover according to the present invention; and
FIG. 11 is a block diagram showing the conceptual structure of a network node for performing handover according to the present invention.

### DETAILED DESCRIPTION OF THE PREFERRED EMBODIMENT

Hereinafter, preferred embodiments of the present invention will be described with reference to the accompanying drawings. In the following description of the present invention, a detailed description of known functions and configurations incorporated herein is omitted to avoid making the subject matter of the present invention unclear.

One aspect of the present invention is to provide handover by using an interactive channel in a digital broadcasting system.

It will be assumed in the following description that a DVB-H system is used. However, it can be easily understood by those skilled in the art that the basic object of present invention, i.e. handover for broadcasting services, is applicable to other types of systems having similar technical background and channel type with little modification, i.e. without substantially departing from the scope of the present invention.

Compared with terrestrial systems, one of the major prerequisites for portable broadcasting systems is smooth and seamless service handover. As used herein, seamless handover means that, after receiving a time division burst (hereinafter, referred to as a "current burst") including broadcasting data within a current cell, a receiver is synchronized with an adjacent cell and is able to receive a first burst, which is transmitted within the adjacent cell after the current burst and which includes broadcasting data of the same service.

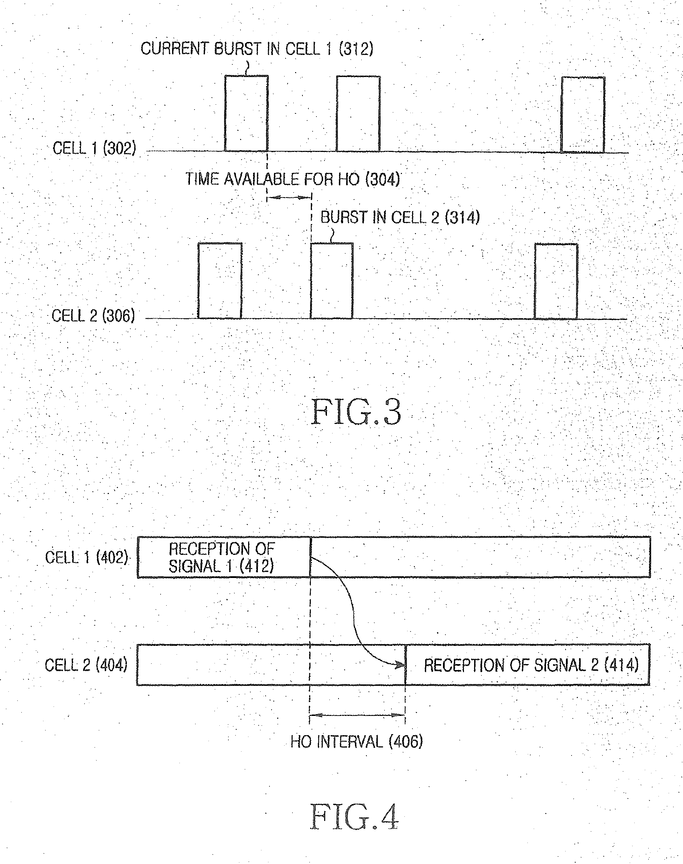

FIG. 3 shows an example of time available for handover in a DVB-H system. Referring to FIG. 3, cell 1 302 and cell 2 304 are transmitting bursts, respectively. After receiving a current burst 312 of the cell 1 302, a receiver receives from the cell 2 304 a first burst 314, which is associated with the same service as the current burst 312 and which begins later than the current burst 312. Cell 2 304 is adjacent to the cell 1 302. In this case, the receiver can perform handover for a period of time 306 from the current burst 312 to the first burst 314, and that period of time 306 is referred to as time available for handoverAnother critical factor affecting the receiver's handover ability is a handover interval, which refers to a minimum period of time need by the receiver to switch from a cell to an adjacent cell and begin to receive signals from the new cell.

FIG. 4 shows an example of a handover interval in a DVB-H system. As shown, there exists a handover interval 406 between switching to cell 2 404, while signal 1 412 is received from cell 1 402, and reception of signal 2 414 from the cell 2 404.

The handover interval 406, which is needed by a receiver for handover, must be shorter than time available for handover 306. For example, a handover interval in the case of a specific receiver consists of the following time elements:
Receiver-implementation-dependent time: time needed by the receiver to be tuned to an adjacent cell, to be synchronized with a carrier, and to empty a burst buffer. This time value is known from device characteristics of the receiver.
Network-configuration-dependent time: time needed by the receiver to receive control signals regarding TSs, such as a PAT (Program Association Table) and a PMT (Program Map Table), in the case of handover between TSs. The upper limit of this time value is 100ms.
DVB-H standards enable the burst cycle time of a specific base stream to vary dynamically. By taking advantage of such characteristics for actual implementation, efficient band allocation for variable bit rate streams becomes possible. In the case of a completely dynamic time division system, which has different band allocation for each cell and which has a burst interval and duration time optimized for each cell, time available for handover varies in an unexpected manner for each burst from 0 to a maximum burst interval within an adjacent cell.

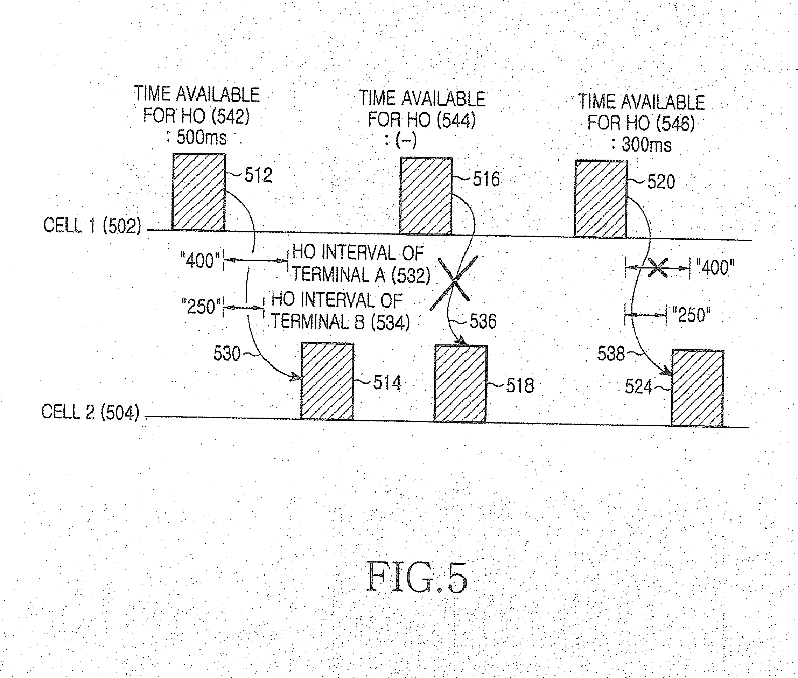

FIG. 5 shows an example of a handover operation in a DVB-H system. As shown, terminals A and B (not shown) are in the process of handover from cell 1 502 to cell 2 504 at a specific time, and handover intervals 532 and 534 of the terminals A and B are 400ms and 250ms, respectivelyReferring to FIG. 5, after receiving a first burst 512 from cell 1 502, terminals A and B switch to cell 2 504 and receive a first burst 514, which is associated with the same service. In this case, time available for handover 542 between the first bursts 512 and 514 is 500ms, and handover intervals 523 and 534 of the terminals A and B, which are in the process of handover between the first bursts 512 and 514, is less than the time available for handover 542. As indicated by reference numeral 530, both terminals A and B can hand over between the first bursts 512 and 514.

In the case of second bursts 516 and 518, transmission of the second burst 518 begins even before transmission of the second burst 516 is complete. The time available for handover 544 between the second bursts 516 and 518 has an invalid value, i.e. negative value (-). Therefore, as indicated by reference numeral 536, both terminals A and B cannot hand over between the second bursts 516 and 518.

In the case of third bursts 520 and 524, the time available for handover between them is 300ms, which is greater than a handover interval 534 of terminal B, but is shorter than a handover interval 532 of terminal A. Therefore, as indicated by reference numeral 538, the terminal A cannot hand over between the third bursts 520 and 524, but the terminal B can.

As is clear from the above description, the fact that a receiving terminal can hand over from a burst of a current cell does not necessarily mean that handover from any burst to an adjacent cell is possible. Even when the receiving terminal cannot hand over from a burst of the current cell, it may be able to hand over from other bursts to an adjacent cell at a later time.
of the determination of whether a handover can be made must be based on various factors, including network conditions, i.e. time available for handover, and the terminal's ability, i.e. handover interval. According to the present invention, the determination is supported by an interactive channel of a broadcasting system. The interactive channel, as used herein, may be an interactive channel of a broadcasting system or an interactive channel of an interactive system, which is accessible by the terminals. Via the interactive channel, terminals are capable of interactive communication with networks. For example, the interactive system may be a cellular system.

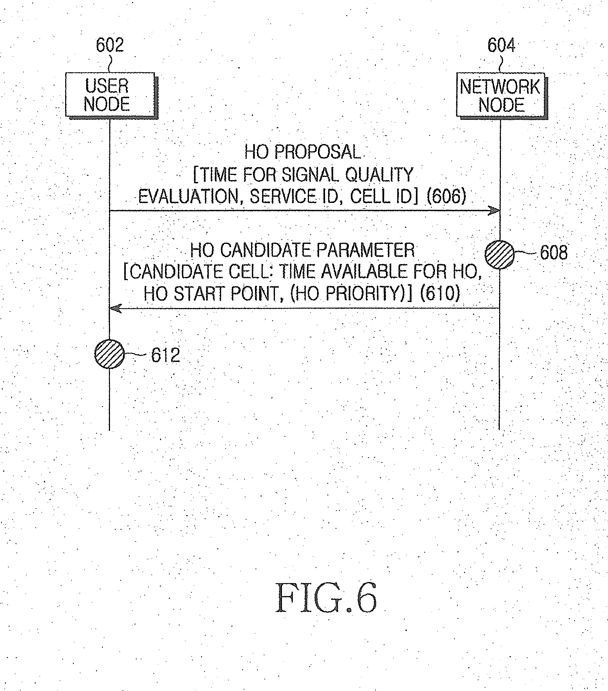

FIG. 6 shows the flow of signals for handover according to the present invention. A network node 604 may consists of a single or a plurality of physical or functional nodes and may be positioned in a broadcasting system or cellular system so as to communicate with a terminal 602 via an interactive channel.

Referring to FIG. 6, the terminal 602 transmits in step 606 a handover proposal message *HO PROPOSAL* to the network node 604 when it is determined that the quality of currently-received broadcasting service signals is below a threshold and that handover is necessary. The handover proposal message may include a time for signal quality evaluation, a service ID, and a cell ID. Based on the time for signal quality evaluation, service ID, and cell ID included in the handover proposal message, the network node 604 searches in step 608 for and evaluates all candidate cells, which provide a service corresponding to the service ID. In addition, the network node 604 calculates handover candidate parameters, such as handover start point and/or time available for handover, for respective candidate cells.

When it comes to communicating between the terminal 602 and the network node 604, signal quality evaluation regarding candidate cells may take some time. Off-time between two bursts varies between a few of milliseconds to several seconds. In general, the time for signal quality evaluation may be greater than a single period of off-time. Therefore, the handover start point may vary depending on the length of time for signal quality evaluation. As mentioned above, the time available for handover varies at different points in time. The network node 604 preferably calculates the handover start point first.

The network node 604 transmits in step 610 a handover candidate parameter message *HO CANDIDATE PARAMETER,* including a handover candidate parameter based on the result of evaluation of the candidate cells, to the terminal 602. The handover candidate parameter message includes at least one of a time available for handover regarding respective candidate cells, handover priority based on the time available for handover, and handover start point. The terminal 602 uses the handover candidate parameter and hands over to a suitable one of the candidate cells in step 614.

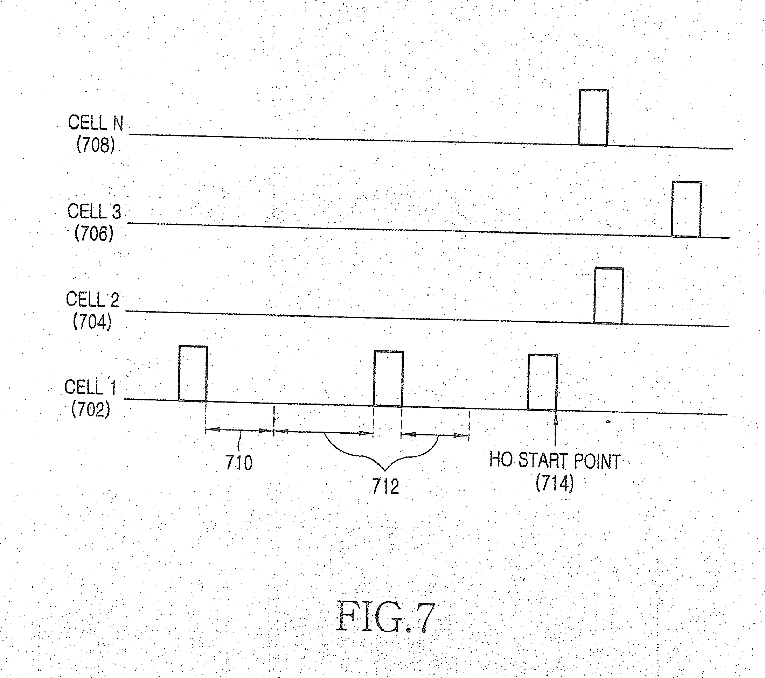

FIG. 7 shows the determination of a handover candidate parameter according to the present invention.

Referring to FIG. 7, there are N cells 702, 704, 706, and 708, to which the terminal can hand over, and the network node determines whether to handover for the terminal positioned in cell 1 702. Reference numeral 710 refers to the time needed by the terminal to transmit a handover proposal message and receive a handover candidate parameter, and reference numeral 712 refers to the total time necessary to evaluate the signal quality of other cells (i.e. candidate cells) based on the handover candidate parameter. Then, handover start point 714 is obtained by adding the time 710 and 712 to time of termination of the current burst of cell 1 702.

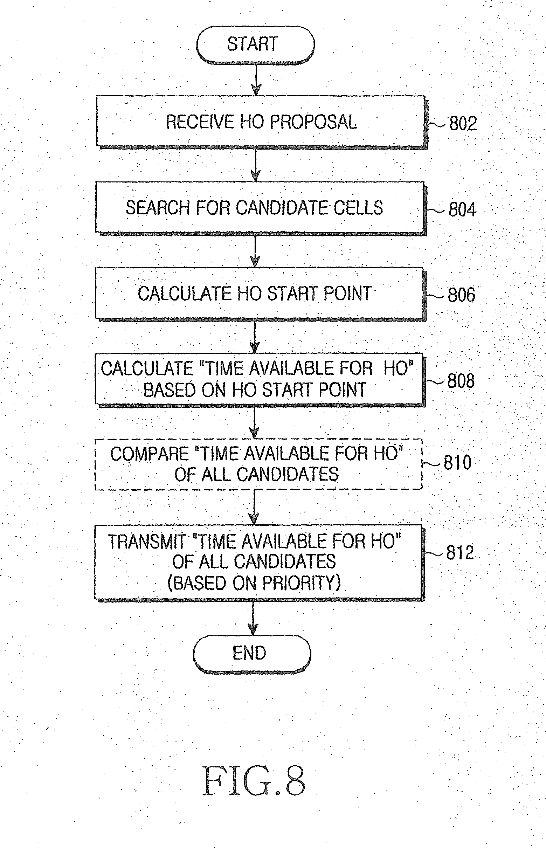

FIG. 8 is a flowchart showing a handover operation of a network node according to the present invention.

Referring to FIG. 8, in step 802 the network node receives a handover proposal message from a terminal, which is in the process of receiving a digital broadcasting service from a serving cell, and obtains a time for signal quality evaluation, a service ID, and a cell ID, which are included in the handover proposal message. In step 804 the network node searches for N candidate cells, which include a service corresponding to the service ID, from all cells adjacent to the service cell.

The time for signal quality evaluation is needed by the terminal to evaluate the signal quality of a cell. In step 806, the network node calculates the total time necessary to evaluate the signal quality of all candidate cells based on the number of candidate cells N. Then, the network node transmits the time necessary to evaluate the signal quality of the candidate cells together with the handover proposal message. By adding the time necessary to receive handover candidate parameters, the network node calculates the total time necessary to determine the handover. As a result, the handover start point is obtained by adding the total time necessary to determine the handover to the time of termination of the burst of the serving cell.

In step 808, the network node calculates the time available for handover with regard to each candidate cell, based on the determined handover start point. After comparing the time available for handover of respective candidate cells, the network node can decide the handover priority of the candidate cells in the order of time available for handover in step 810. It is to be noted that step 810 may be omitted if necessary, because it is not always required to determine the handover priority of the candidate cells.

In step 812, the network node transmits a handover candidate parameter, which is based on the decided handover priority, to the terminal. Instead of deciding the handover priority, the network node may transmit information regarding the handover start point of each candidate cell to the terminal. In this case, the information is directly included in the handover candidate parameter. An example of the handover candidate parameter is given in Table 1 below.

**Table 1**

| | | | | |
|---|---|---|---|---|
| Candidate | Cell 1 | Cell 2 | - | Cell N |
| Time available for handover | 500ms | 300ms | - | 100ms |

There is some delay until the terminal receives a burst from a broadcast transmitter, and the delay depends on the distance between the terminal and the broadcast transmitter, as well as other factors. Such a delay must be taken into account based on the current position of the terminal, when the time available for handover of the terminal is compared with the handover interval. The current position of the terminal and the resulting relative distance from each transmitter can be estimated from the cell IF of the candidate cells and that of the current cell (i.e. serving cell). After the delay is calculated from the estimated distance, handover of the terminal cannot be conducted without data loss unless the time available for handover is longer than the sum of the handover interval and the delay.

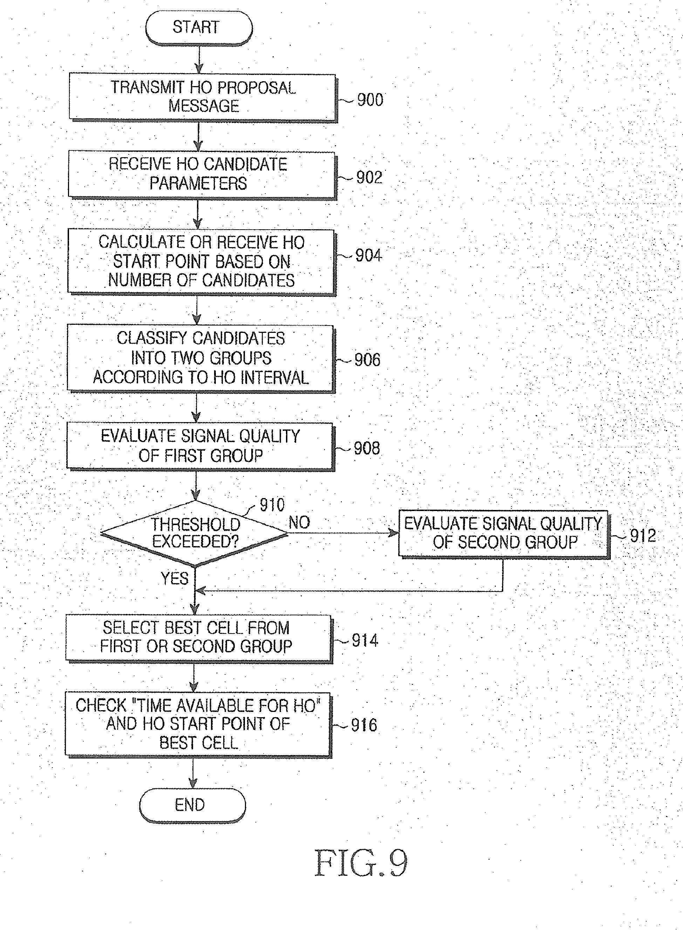

FIG. 9 is a flowchart showing a handover operation of a terminal according to the present invention.

Referring to FIG. 9, in step 900 the terminal transmits a handover proposal message to a network node, which controls handover. The terminal receives a handover candidate parameter from the network node in step 902. The terminal calculates the handover start point for respective candidate cells based on the time available for handover included in the handover candidate parameter or obtain the handover start point of respective candidate cells from the handover candidate parameter in step 904. The terminal determines an best cell for handover by using the handover candidate parameter. The following description of steps 906 to 912 is given as an example of an operation for determining an best cell by the terminal, and the scope of the present invention is not limited thereby in any manner.

In step 906, the terminal classifies all candidate cells into a first group of cells, the time available for handover of which is greater than the corresponding handover interval, and a second group of cells, the time available for handover of which is less than the corresponding handover interval. In step 908, the terminal evaluates the signal quality of candidate cells belonging to the first group. In step 910, the terminal decides if the reference signal quality of the first group, e.g. the signal quality of the best candidate cell, exceeds a threshold. If so, the terminal selects the best candidate cell of the first group as the handover target (i.e. best cell) in step 914. Instead of the best signal quality, for another example, the terminal may compare the average signal quality of candidate cells belonging to the first group with a corresponding threshold in step 910.

If no candidate cells of the first group exceed the threshold, the terminal evaluates the signal quality of candidate cells belonging to the second group in step 912. Then, the terminal selects a candidate cell of the second group, which has the best signal quality, as the best cell in step 914. This is based on the fact that packet loss resulting from slow handover is preferred to that resulting from poor reception.

After selecting the best cell in this manner, the terminal checks the time available for handover and handover start point of the selected best cell and hands over to that cell in step 916.

Although not shown in the drawings, according to an alternative embodiment, the terminal receives a handover candidate parameter based on the priority and calculates the handover start point of the respective candidate cells. Based on the handover candidate parameter, the terminal evaluates the signal quality of the candidate cells and collects candidate cells satisfying a predetermined requirement. A candidate cell, the time available for handover of which is greater than the handover interval and which has the best signal quality, is selected as the best cell from the collected candidate cells. If no candidate cells have signal quality above a threshold although the time available for handover of the candidate cells is greater than the handover interval, the terminal selects a candidate cell with the best signal quality as the best cell.

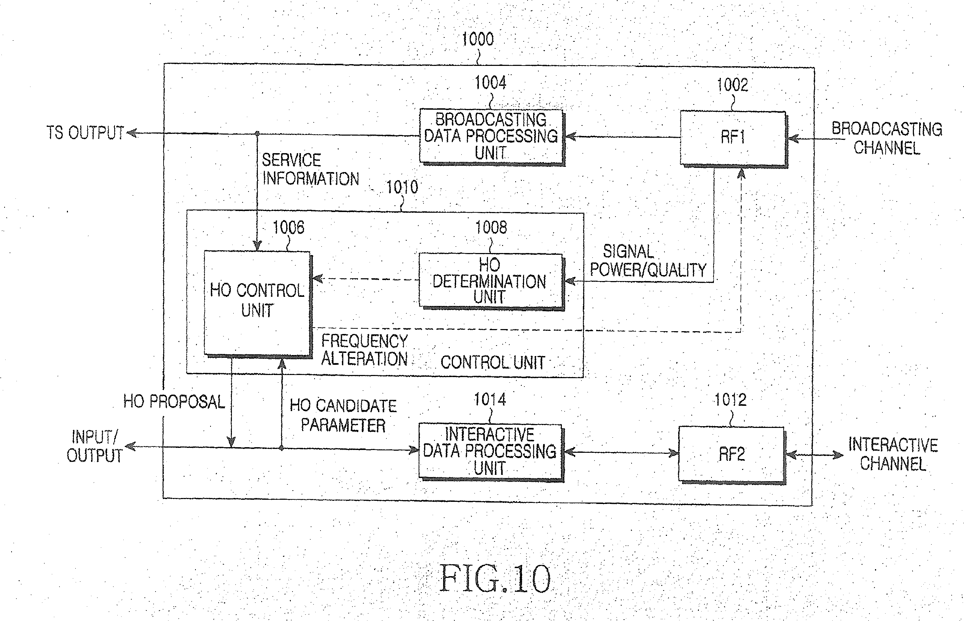

FIG. 10 is a block diagram showing the conceptual structure of a DVB-CBMS receiver for performing handover according to the present invention. The DVB-CBMS receiver 1000 includes first and second RF (Radio Frequency) units 1002 and 1004, a broadcasting data processing unit 1004, an interactive data processing unit 1014, and a control unit 1010. The control unit 1010 consists of a handover determination unit 1008 and a handover control unit 1006. Blocks having no significant relevance to the handover operation are omitted for clarity.

Referring to FIG. 10, the first RF unit 1002 receives broadcasting signals from a broadcasting system and down-converts the signals. The first RF unit 1002 evaluates the power/quality of the received broadcasting signals and informs the handover determination unit 1008 of the evaluated signal quality. The first RF unit 1002 modifies the search frequency according to a handover command from the handover control unit 1006. The broadcasting data processing unit 1004 demodulates and decodes the down-converted broadcasting signals and outputs a corresponding TS.

The second RF unit 1012 receives interactive signals from an interactive system and down-converts the signals. If necessary, the second RF unit 1012 transmits interactive signals to the interactive system. The interactive data processing unit 1014 demodulates and decodes the down-converted interactive signals. In addition, the interactive data processing unit 1014 encodes and modulates interactive signals to be transmitted, so that the second RF unit 1012 is provided with the signals.

The handover determination unit 1008 determines if handover is necessary based on the signal quality of the serving cell, which has been transmitted from the first RF unit 1002. If necessary, the handover determination unit 1008 notifies the handover control unit 1006 of the determination. The handover control unit 1006 collects information regarding the service ID of the currently-received service, the cell ID of the serving cell, and the time for signal quality evaluation. The handover control unit 1006 provides the interactive data processing unit 1014 with a handover proposal message, including the service ID, the cell ID, and the time for signal quality evaluation so that the handover proposal message is transmitted via an interactive channel. The handover control unit 1006 is provided with a handover candidate parameter from the interactive data processing unit 1014. In this case, the handover candidate parameter has been received via the interactive channel or another channel in response to the handover proposal message. The handover control unit 1006 evaluates the signal quality of respective candidate cells provided by the handover determination unit 1008 and, based on the above-mentioned operation of the terminal, selects an best cell with the best signal quality from the candidate cells. The handover control unit 1006 provides the first RF unit 1002 with a frequency alternation command requesting that the search frequency is altered to a frequency corresponding to the best cell.

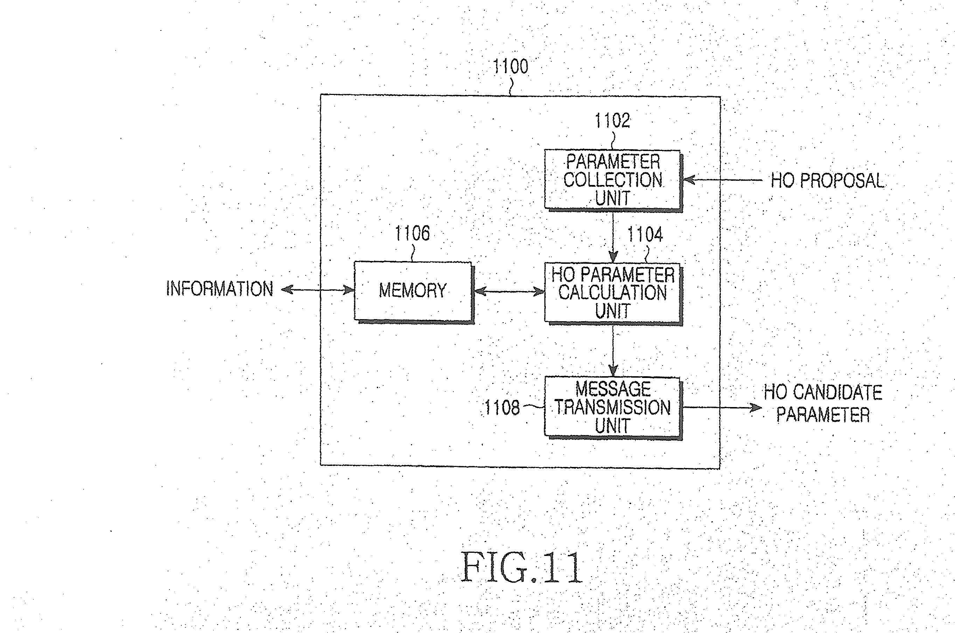

FIG. 11 is a block diagram showing the conceptual structure of a network node for performing handover according to the present invention. As shown, the network node 1100 includes a parameter collection unit 1102, a handover parameter calculation unit 1104, a memory 1106, and a message transmission unit 1108.

Referring to FIG. 11, the memory 1106 acts as a database for storing service information regarding all service bursts available from every cell. Upon receiving a handover proposal message from the terminal, the parameter collection unit 1102 collects information regarding the time for signal quality evaluation, the service ID, and the cell ID from the received handover proposal message and transmits the collected information to the handover parameter calculation unit 1104.

Based on the information regarding a service, which the terminals wants to receive, particularly the time for signal quality evaluation, the service ID, and the cell ID of a cell in which the terminal is currently positioned, the handover parameter calculation unit 1104 searches for service information of all candidate cells, including the service, from the memory 1106. The handover parameter calculation unit 1104 can calculate the handover start point based on the number of candidate cells. The handover start point is obtained by adding the total time necessary to determine handover to the time of termination of the burst of the service in the cell corresponding to the cell ID. The total time necessary to determine handover is the sum of the total time necessary to evaluate the signal quality of all candidate cells and the time necessary to receive a handover parameter after the handover proposal message is transmitted.

The time available for handover is calculated for respective candidate cells based on the handover start point. By comparing the time available for handover of the candidate cells, the handover parameter calculation unit 1104 composes a handover candidate parameter indicating the handover priority of candidate cells. The message transmission unit 1108 transmits to the terminal the handover candidate parameter, which has been provided by the handover parameter calculation unit 1104. Instead of the handover priority, the handover candidate parameter may include information regarding the handover start point of respective candidate cells.

As mentioned above, according to the present invention, the network nodes deals with most procedures regarding handover based on time available for handover, and only the evaluation result is transmitted to the terminal via an interactive channel. This overcomes problems which cannot be solved when the terminal alone hands over and reduces the amount of power consumed by the terminal.

While the invention has been shown and described with reference to certain preferred embodiments thereof, it will be understood by those skilled in the art that various changes in form and details may be made therein without departing from the spirit and scope of the invention as defined by the appended claims.

## Claims

1. A handover method by a network node in a digital broadcasting system, the method comprising the steps of:
receiving a handover proposal message from a terminal receiving a broadcasting service from a serving cell, the handover proposal message containing a time for a signal quality evaluation, a service ID, and a cell ID;
evaluating signal qualities of candidate cells providing a service corresponding to the service ID;
calculating a handover candidate parameter based on the evaluation results of the signal qualities of the candidate cells, the handover candidate parameter indicating a time available for handover with regard to each of the candidate cells; and
transmitting the handover candidate parameter to the terminal.

2. The handover method as claimed in claim 1, wherein the handover candidate parameter further includes a handover start point.

3. The handover method as claimed in claim 2, wherein the handover start point is calculated by adding a total time necessary to determine a handover and a time of termination of a burst of the service provided by the serving cell.

4. The handover method as claimed in claim 3, wherein the total time necessary to determine handover is equal to a sum of a time necessary to receive the handover candidate parameter after transmitting the handover proposal message and a time necessary to evaluate the signal qualities of the candidate cells.

5. The handover method as claimed in claim 1, wherein the time available for handover is calculated by obtaining a time difference between a burst of the service transmitted by the serving cell and a burst of the service transmitted by a corresponding candidate cell.

6. The handover method as claimed in claim 1, wherein the handover candidate parameter indicates a cell identifier of each candidate cell and handover priority based on the time available for handover.

7. A network node apparatus for performing handover in a digital broadcasting system, the apparatus comprising:
a parameter collection unit for receiving a handover proposal message from a terminal receiving a broadcasting service from a serving cell, the handover proposal message containing a time for a signal quality evaluation, a service ID, and a cell ID;
a handover parameter calculation unit for evaluating signal qualities of candidate cells providing a service corresponding to the service ID, calculating a handover candidate parameter based on a result of the evaluation of the signal qualities of the candidate cells, the handover candidate parameter indicating a time available for handover with regard to each of the candidate cells; and
a message transmission unit for transmitting the handover candidate parameter to the terminal.

8. The network node apparatus as claimed in claim 7, wherein the handover candidate parameter further includes a handover start point.

9. The network node apparatus as claimed in claim 8, wherein the handover start point is calculated by adding a total time necessary to determine handover and a time of termination of a burst of the service provided by the serving cell.

10. The network node apparatus as claimed in claim 9, wherein the total time necessary to determine handover is equal to a sum of a time necessary to receive the handover candidate parameter after transmitting the handover proposal message and a time necessary to evaluate the signal qualities of the candidate cells.

11. The network node apparatus as claimed in claim 8, wherein the time available for handover is calculated by obtaining a time difference between a burst of the service transmitted by the serving cell and a burst of the service transmitted by a corresponding candidate cell.

12. The network node apparatus as claimed in claim 7, wherein the handover candidate parameter indicates a cell identifier of each candidate cell and handover priority based on the time available for handover.

13. A handover method by a terminal in a digital broadcasting system, the method comprising the steps of:
transmitting a handover proposal message while receiving a broadcasting service from a serving cell, the handover proposal message containing a time for signal quality evaluation, a service ID, and a cell ID;
receiving a handover candidate parameter indicating a time available for handover with regard to candidate cells providing a service corresponding to the service ID;
selecting a cell from the candidate cells based on the time available for handover; and
performing handover to the selected cell.

14. The handover method as claimed in claim 13, wherein the handover candidate parameter further includes a handover start point.

15. The handover method as claimed in claim 14, wherein the handover start point is calculated by adding a total time necessary to determine a handover and a time of a termination of a burst of the service provided by the serving cell.

16. The handover method as claimed in claim 15, wherein the total time necessary to determine the handover is equal to a sum of a time necessary to receive the handover candidate parameter after transmitting the handover proposal message and a time necessary to evaluate signal qualities of candidate cells.

17. The handover method as claimed in claim 13, wherein the time available for handover is calculated by obtaining a time difference between a burst of the service transmitted by the serving cell and a burst of the service transmitted by a corresponding candidate cell.

18. The handover method as claimed in claim 13, wherein the step of selecting the best cell comprises:
classifying all candidate cells into a first group of candidate cells and a second group of candidate cells, a time available for handover of the first group of candidate cells being greater than a handover interval of the terminal, a time available for handover of the second group of candidate cells being less than or equal to the handover interval of the terminal;
selecting a candidate cell from the first group of candidate cells as the best cell, the candidate cell having a best signal quality exceeding a threshold; and
selecting a candidate cell having a best signal quality from the second group of candidate cells as the best cell when no candidate cells of the first group have signal quality exceed the threshold.

19. The handover method as claimed in claim 13, wherein the step of selecting the best cell comprises:
selecting candidate cells having signal quality exceeding a threshold from all candidate cells;
selecting a candidate cell having a best signal quality from the candidate cells having signal quality exceeding the threshold as the optimal candidate cell; and
selecting the candidate cell having best signal quality as the best cell when no candidate cells have signal quality exceed the threshold.

20. The handover method as claimed in claim 13, wherein the handover candidate parameter indicates a cell identifier of each candidate cell and handover priority based on the time available for handover.

21. A terminal apparatus for performing handover in a digital broadcasting system, the apparatus comprising:
a first radio frequency unit for receiving a broadcasting signal of a desired broadcasting service from a broadcasting system by using a search frequency of a serving cell, the first radio frequency unit evaluating signal quality of the broadcasting signal;
a broadcasting data processing unit for demodulating and decoding the broadcasting signal, the broadcasting data processing unit extracting service information from the broadcasting signal;
a second radio frequency unit for transmitting/receiving an interactive signal to/from an interactive system;
an interactive data processing unit for transmitting a handover proposal message via the second radio frequency unit while receiving a broadcasting service from the serving cell, the handover proposal message containing a time for signal quality evaluation, a service ID, and a cell ID, the interactive data processing unit receiving a handover candidate parameter via the second radio frequency unit, the handover candidate parameter indicating a time available for handover with regard to candidate cells providing the broadcasting service received from the serving cell;
a handover determination unit for determining if a handover is necessary based on signal quality of the broadcasting signal; and
a handover control unit for selecting a cell from the candidate cells based on the signal qualities of the candidate cells, the time available for handover, and the service information when it is determined that a handover is necessary, the handover control unit controlling the first and second radio frequency units to perform handover to the selected cell.

22. The terminal apparatus as claimed in claim 21, wherein the handover candidate parameter further includes a handover start point.

23. The terminal apparatus as claimed in claim 22, wherein the handover start point is calculated by adding a total time necessary to determine handover and a time of a termination of a burst of the service provided by the serving cell.

24. The terminal apparatus as claimed in claim 21, wherein the total time necessary to determine handover is equal to a sum of a time necessary to receive the handover candidate parameter after transmitting the handover proposal message and a time necessary to evaluate the signal qualities of the candidate cells.

25. The terminal apparatus as claimed in claim 21, wherein the time available for handover is calculated by obtaining a time difference between a burst of the service transmitted by the serving cell and a burst of the service transmitted by a corresponding candidate cell.

26. The terminal apparatus as claimed in claim 21, wherein the handover control unit is adapted to classify all candidate cells into a first group of candidate cells and a second group of candidate cells, time available for handover of the first group of candidate cells being greater than a handover interval of the terminal, time available for handover of the second group of candidate cells being less than or equal to the handover interval of the terminal, the handover control unit selecting a candidate cell from the first group of candidate cells as the best cell, the candidate cell having best signal quality exceeding a threshold, the handover control unit selecting a candidate cell having best signal quality from the second group of candidate cells as the best cell when no candidate cells of the first group have signal quality exceed the threshold.

27. The terminal apparatus as claimed in claim 21, wherein the handover control unit is adapted to select candidate cells having signal quality exceeding a threshold from all candidate cells, the handover control unit selecting a candidate cell having a best signal quality from the candidate cells having signal quality exceeding the threshold as the optimal candidate cell, the handover control unit selecting the candidate cell having best signal quality as the best cell when no candidate cells have signal quality exceed the threshold.

28. The terminal apparatus as claimed in claim 21, wherein the handover candidate parameter indicates a cell identifier of each candidate cell and handover priority based on the time available for handover.
